(19) Europäisches Patentamt
European Patent Office
Office européen des brevets

(11) **EP 3 903 123 B1**

(12) **FASCICULE DE BREVET EUROPEEN**

(45) Date de publication et mention
de la délivrance du brevet:
**23.08.2023 Bulletin 2023/34**

(21) Numéro de dépôt: **19832152.3**

(22) Date de dépôt: **27.12.2019**

(51) Classification Internationale des Brevets (IPC):
**G01S 7/41** (2006.01)

(52) Classification Coopérative des Brevets (CPC):
**G01S 7/414; G01S 7/417**

(86) Numéro de dépôt international:
**PCT/EP2019/087098**

(87) Numéro de publication internationale:
**WO 2020/136258 (02.07.2020 Gazette 2020/27)**

(54) **DISPOSITIF DE GÉNÉRATION D'UN ENSEMBLE DE DONNÉES SIMULÉES DU FOUILLIS DE MER, PROCÉDÉ ET PROGRAMME D'ORDINATEUR ASSOCIÉS**

VORRICHTUNG ZUR ERZEUGUNG EINES SIMULIERTEN SEEGANGSREFLEXDATENSATZES SOWIE ZUGEHÖRIGES VERFAHREN UND COMPUTERPROGRAMM

DEVICE FOR GENERATING A SIMULATED SEA-CLUTTER DATA SET, AND ASSOCIATED METHOD AND COMPUTER PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.12.2018 FR 1874226**

(43) Date de publication de la demande:
**03.11.2021 Bulletin 2021/44**

(73) Titulaire: **THALES**
**92400 Courbevoie (FR)**

(72) Inventeurs:
• **MESLOT, Vincent**
**33700 MERIGNAC (FR)**
• **CORRETJA, Vincent**
**33700 MERIGNAC (FR)**
• **POMMIER, Marie**
**33700 MERIGNAC (FR)**

(74) Mandataire: **Lavoix**
**2, place d'Estienne d'Orves**
**75441 Paris Cedex 09 (FR)**

(56) Documents cités:
• **G. HENNESSEY ET AL: "Sea-clutter modeling using a radial-basis-function neural network", IEEE JOURNAL OF OCEANIC ENGINEERING., vol. 26, no. 3, 1 juillet 2001 (2001-07-01), pages 358-372, XP055639441, US ISSN: 0364-9059, DOI: 10.1109/48.946510**
• **SU XIAOHONG ET AL: "Prediction of Sea Clutter Based on Chaos Theory with RBF and K-mean Clustering", RADAR 2006 : PROCEEDINGS OF 2006 CIE INTERNATIONAL CONFERENCE ON RADAR ; OCT. 16 - 19, 2006, SHANGHAI, CHINA, IEEE OPERATIONS CENTER, PISCATAWAY, NJ, 1 octobre 2006 (2006-10-01), pages 1-4, XP031073321, ISBN: 978-0-7803-9582-4**
• **IAN J GOODFELLOW ET AL: "Generative Adversarial Nets", NIPS'14 PROCEEDINGS OF THE 27TH INTERNATIONAL CONFERENCE ON NEURAL INFORMATION PROCESSING SYSTEMS, vol. 2, 8 décembre 2014 (2014-12-08), pages 2672-2680, XP055572979, DOI: https://dl.acm.org/citation.cfm?id=2969125 cité dans la demande**
• **Diederik P Kingma ET AL: "Adam: A Method for Stochastic Optimization", ICLR 2015, 23 juillet 2015 (2015-07-23), XP055425253, Extrait de l'Internet: URL:https://arxiv.org/pdf/1412.6980v8.pdf [extrait le 2017-11-15] cité dans la demande**

- **VINCENT DUMOULIN ET AL: "A guide to convolution arithmetic for deep learning", ARXIV.ORG, CORNELL UNIVERSITY LIBRARY, 201 OLIN LIBRARY CORNELL UNIVERSITY ITHACA, NY 14853, 23 mars 2016 (2016-03-23), XP081351181, cité dans la demande**

**Description**

La présente invention concerne un procédé de génération du type d'un ensemble de données simulées du fouillis de mer.

L'invention concerne également un dispositif de génération pour la mise en oeuvre du procédé selon l'invention.

L'invention concerne également un programme d'ordinateur comportant des instructions qui, lorsqu'elles sont exécutées par un ordinateur, mettent en oeuvre le procédé de génération précité.

On connait de l'article « Sea-clutter modeling using a radial-basis-function neural network » de G. Hennessey et AI et de l'article « Prédiction of Sea Clutter Based on Chaos Theory with RBF and K-mean Clustering » de Su Xiaohong et AI, des procédés de génération d'un ensemble de données simulées de fouillis de mer.

Dans le cadre de missions de surveillance maritime, des systèmes radars aéroportés sont utilisés pour détecter des cibles à la surface de l'eau. Un système radar capte un signal rétrodiffusé par les cibles. Une détection est identifiée lorsque le niveau du signal capté franchit un seuil de détection, qui est prédéfini, soit manuellement par l'opérateur, soit automatiquement par un dispositif de détermination adaptatif de la valeur du seuil de détection.

Cependant, le système radar reçoit aussi un signal perturbateur rétrodiffusé par la mer, appelé fouillis de mer (« clutter » en anglais). Les impulsions du fouillis de mer influent négativement sur les performances de détection.

En effet, lorsque le niveau du signal réfléchi par une cible est faible par rapport au niveau des nombreuses impulsions du fouillis de mer, si le seuil de détection est placé à une valeur haute pour éviter de considérer les impulsions parasites comme des détections, alors une petite cible ne sera pas détectée ; en revanche, si le seuil de détection est placé à une valeur basse, alors les détections associées à des cibles seront noyées parmi un grand nombre de détections associées à des impulsions parasites.

Une connaissance précise des propriétés du fouillis de mer est donc nécessaire pour pouvoir déterminer un seuil de détection optimal d'un système radar donné afin de mieux détecter les cibles d'intérêt, ou, plus généralement, pour pouvoir définir les caractéristiques d'un système radar lors de la conception de ce dernier.

Il existe un besoin de disposer d'une simulation numérique en reproduisant le plus exactement possible les conditions d'emplois opérationnelles d'un système radar.

Une telle simulation numérique implique en particulier de connaître les propriétés du fouillis de mer avec précision.

On distingue différentes propriétés du fouillis de mer : les propriétés non cohérentes, comprenant la puissance moyenne et la distribution statistique de la puissance du fouillis de mer ; et les propriétés cohérentes, comprenant la fréquence Doppler centrale et la largeur du spectre Doppler du fouillis de mer.

Une bonne simulation numérique se doit alors de générer des données de fouillis de mer simulées en tenant compte des propriétés non cohérentes et cohérentes du fouillis de mer.

Il existe des moyens pour générer des données de fouillis de mer simulées en fonction de modèles statistiques.

L'article « Radar Sea Clutter Model » de M. M. Horst, F. B. Dyer et M. T. Tuley, dans IEEE international conférence on Antennas and Propagation (1978), décrit un modèle statistique du fouillis de mer prenant en compte des conditions physiques et un modèle physique de rétrodiffusion d'une onde électromagnétique sur la surface de l'eau. Cet article décrit notamment un coefficient de réflectivité, qui est une mesure permettant de déterminer la puissance relative du signal rétrodiffusé par le fouillis de mer par unité de surface. Dans le modèle physique de rétrodiffusion décrit, le coefficient de réflectivité dépend notamment d'un angle d'élévation, d'une vitesse du vent, d'une hauteur moyenne des vagues, d'un angle de direction entre le pointage de l'antenne et la direction du vent, de la longueur d'onde et de la polarisation du signal radar.

Cependant, une telle simulation du fouillis de mer se base sur un modèle statistique traduisant un comportement moyen du fouillis de mer, évalué à partir d'un nombre important de données réelles enregistrées pour des conditions physiques similaires.

Par conséquent, une telle simulation permet seulement d'obtenir des données simulant un comportement moyen du fouillis de mer. Elle ne permet pas donc de générer des données simulant des comportements particuliers, comportant par exemple des irrégularités (telles que par exemple des irrégularités dues à une saute de vent dans une partie seulement de la zone maritime imagée), comme on en trouve dans des données réelles.

De plus, en se fondant sur un tel comportement moyen, il y a peu de variabilité entre les différentes simulations.

Le but de l'invention est alors de proposer un procédé de génération permettant d'obtenir des données simulées du fouillis de mer ne présentant pas les désavantages précités.

A cet effet, l'invention a pour objet un procédé de génération selon la revendication 1.

Suivant d'autres aspects avantageux le procédé est selon la revendication 2.

L'invention a également pour objet un dispositif de génération selon la revendication 3.

Suivant d'autres aspects avantageux, le dispositif de génération est selon l'une quelconque des revendications 4 à 9.

L'invention a également pour objet un programme d'ordinateur selon la revendication 10.

Les caractéristiques et avantages de l'invention apparaîtront à la lecture de la description qui va suivre d'un mode de réalisation particulier, donné uniquement à titre d'exemple non limitatif, la description étant faite en référence aux dessins annexés sur lesquels :

- [Fig 1] la figure 1 est une représentation schématique d'un dispositif de génération d'un ensemble de données simulées du fouillis de mer à partir d'une base de données, comprenant notamment un module de génération et un module de discrimination,
- [Fig 2] la figure 2 est une représentation d'un premier réseau de neurones mis en oeuvre par le module de génération de la figure 1,
- [Fig 3] la figure 3 est une représentation d'un deuxième réseau de neurones mis en oeuvre par le module de discrimination de la figure 1,
- [Fig 4] la figure 4 est un organigramme d'une phase d'entrainement du procédé de génération d'un ensemble de données simulées du fouillis de mer, et

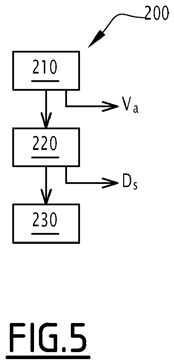

- [Fig 5] la figure 5 est un organigramme d'une phase d'exploitation du procédé de génération d'un ensemble de données simulées du fouillis de mer.

La présente invention se propose d'utiliser un algorithme d'apprentissage profond ( « Deep Learning » en anglais) entrainé sur des données radar réelles afin de générer des données radar simulées représentatives de la structure réelle du fouillis de mer. Une telle approche permet ainsi de s'affranchir des modèles statistiques utilisés pour décrire le comportement moyen du fouillis de mer.

On entend par « donnée de fouillis de mer », une mesure d'une grandeur physique associée au fouillis de mer, mesure pouvant être effectuée par une électronique bas niveau d'un système radar, notamment un système radar aéroporté. En variante, la notion de données pourrait correspondre à une grandeur physique avant sa mesure par le système radar.

Un ensemble de données de fouillis de mer est une matrice de données de fouillis de mer, donnant des données en fonction de coordonnées géométriques. Selon l'exemple décrit, chaque ensemble de données de fouillis de mer est une matrice à deux dimensions, selon une coordonnée d'angle et une coordonnée de distance. Un ensemble de données de fouillis de mer présente par exemple 128 pas d'angle et 128 pas de distance.

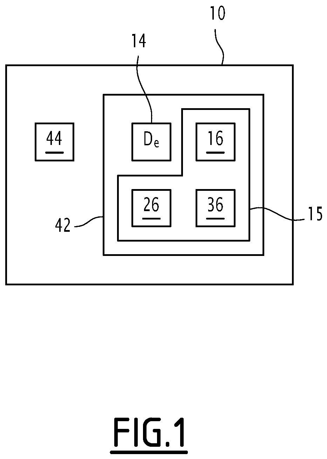

La figure 1 représente un dispositif de génération 10 d'un ensemble de données simulées de fouillis de mer.

Le dispositif de génération 10 est un dispositif électronique comportant une unité de traitements d'informations formée par exemple d'une mémoire 42 et d'un processeur 44 associé à la mémoire 42.

La mémoire 42 du dispositif de génération 10 stocke une base de données 14 et un programme informatique 15. L'exécution du programme 15 permet la mise en oeuvre du procédé selon l'invention.

Le programme informatique 15 est un algorithme d'apprentissage du type réseau de neurones convolutifs, de préférence fondé sur le principe GAN, selon l'anglais « Generative Adversarial Network », principe par exemple décrit dans l'article I. J. Goodfellow et al., « Generative adversarial nets », in NIPS, 2014.

Le programme informatique 15 intègre deux réseaux de neurones qui sont entrainés simultanément.

Le programme informatique 15 comporte ainsi un module de génération 16, comportant un premier réseau de neurones, et un module de discrimination 26 comportant un second réseau de neurones.

La base de données 14 comprend une pluralité d'ensemble de données d'entrainement De. La base de données 14 comprend avantageusement au moins $10^5$ ensembles de données d'entraînement De.

Chaque ensemble de données d'entrainement De correspond à un ensemble de données réelles, acquis par un système radar réel et stocké dans la base de données 14.

Avantageusement, un ensemble de données réelles peut conduire à plusieurs ensembles de données d'entrainement par application de transformations de contraste, de luminosité, de gamma et/ou de miroir. De telles techniques d'augmentation de données permettent d'améliorer la généralisation des réseaux de neurones et de générer des données synthétiques avec plus de variations.

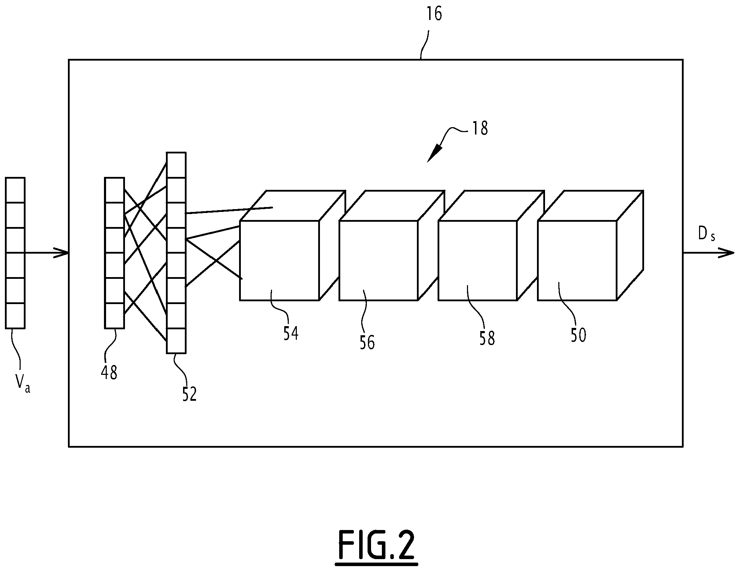

Comme représenté sur la figure 2, le module de génération 16 est propre, à partir d'un vecteur aléatoire Va appliqué en entrée, à produire en sortie un ensemble de données simulées Ds.

Le vecteur aléatoire Va est constitué d'une pluralité de coordonnées. Le nombre de cordonnées est par exemple égal à 100. Le vecteur aléatoire Va est construit de manière à constituer un vecteur gaussien, centré et de variance unitaire, c'est-à-dire dont les coordonnées constituent un bruit blanc.

Le module 16 est constitué par un premier réseau de neurones 18.

Un poids synaptique est associé à chaque neurone du réseau 18, en tant que paramètre. Les valeurs des poids synaptiques évoluent au cours de la phase d'entrainement du réseau, afin d'adapter les poids synaptiques du réseau 18 pour qu'au final, le module de génération 16 produise des ensembles de données simulées Ds qui soient semblables aux ensembles de données d'entraînement de la base de données 14, c'est-à-dire à des ensemble de données réelles.

Les valeurs initiales des poids synaptiques sont, par exemple fixées aléatoirement. Les valeurs finales des poids synaptiques sont celles utilisées dans la phase d'exploitation du module 16 pour générer des ensembles de données simulées exploitables, par exemple pour le test de chaines de traitement de systèmes radar.

Le premier réseau de neurones 18 comporte de préférence une pluralité de neurones artificiels organisés en couches successives. Il comporte par exemple successivement les couches 48, 52, 54, 56, 58 et 50.

La couche d'entrée 48 correspond à la variable d'entrée Va et la couche de sortie 50 correspond à la variable de sortie Ds.

Selon l'exemple illustré sur la figure 2, la couche d'entrée 48 est une couche dense à 1024 sorties ; la couche intermédiaire 52 est une couche dense à 131072 sorties ; la couche 54 est une couche de convolution transposée à deux dimensions avec 128 filtres de taille (5, 5) et un pas de 2 ; la couche 56 est une couche de convolution à deux dimensions avec 32 filtres de taille (5, 5) et un pas de 2 ; la couche 58 est une couche de convolution transposée à deux dimensions avec 32 filtres de taille (5, 5) et un pas de 2 ; et la couche de filtrage 50 est une couche de convolution à deux dimensions avec un filtre de taille (5, 5) et un pas de 2.

Par définition, une couche dense à N sorties est une couche prenant en entrée un vecteur à K coordonnées et produisant en sortie un vecteur à N coordonnées. La couche effectue des opérations linéaires reliant chaque coordonnée du vecteur de sortie à l'ensemble des coordonnées du vecteur d'entrée en les affectant de poids synaptiques évolutifs.

Par définition, une couche de convolution à deux dimensions avec M filtres de taille (k, I) est une couche prenant en entrée une matrice et qui calcule la convolution de chaque filtre avec chaque sous-matrice (k, I) de la matrice d'entrée afin d'obtenir M matrices de convolution aussi appelée carte d'activation. Les filtres dépendent des poids synaptiques du réseau de neurones. Le principe d'une convolution et d'une convolution transposée est décrit dans le document « A guide to convolution arithmetic for deep learning » de V. Dumoulin et F. Visin.

Avantageusement, une fonction d'activation caractérise chaque neurone du premier réseau 18. La fonction d'activation est, par exemple, une fonction non linéaire, par exemple de type ReLU (de l'anglais « Rectified Linear Unit »).

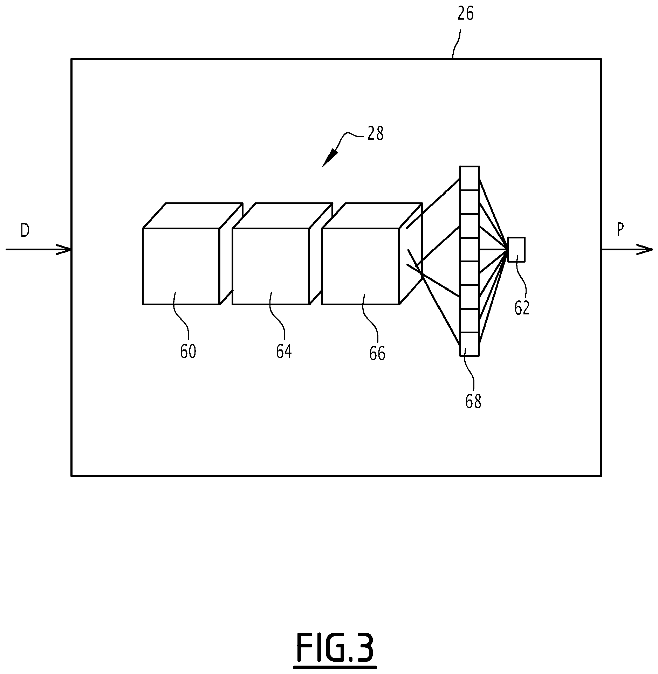

Comme représenté sur la figure 3, le module de discrimination 26 est propre, à partir d'une pluralité d'ensembles de données D appliquée en entrée, à produire en sortie une valeur indicative P, qui est un nombre réel compris entre 0 et 1.

La valeur indicative P correspond à la probabilité que l'ensemble de données appliqué en entrée du module 26 ait un comportement statistique similaire à un ensemble de données réelles.

L'ensemble de données D appliqué en entrée est soit un ensemble de données simulées Ds produit par le module de génération 16, soit un ensemble de données d'entraînement De de la base de données 14.

Comme le premier réseau 18, le deuxième réseau de neurones 28 comporte, pour chaque neurone, des poids synaptiques. Les valeurs initiales des poids synaptiques sont, par exemple, fixées aléatoirement.

Le deuxième réseau de neurones 28 comporte de préférence une pluralité de neurones artificiels organisés en couches successives 60, 62, 64, 66, 68.

Par exemple il comporte une couche d'entrée 60 correspondant à la variable d'entrée D, une couche de sortie 62 correspondant à la variable de sortie P, et des couches intermédiaires 64, 66, 68, disposées successivement entre la couche d'entrée 60 et la couche de sortie 52.

Selon l'exemple illustré sur la figure 3, la couche d'entrée 60 est une couche de convolution à deux dimensions avec 32 filtres de taille (5, 5) et un pas de 2 ; la couche intermédiaire 64 est une couche de convolution transposée à deux dimensions avec 128 filtres de taille (5, 5) et un pas de 2 ; la couche intermédiaire 66 est une couche de convolution à deux dimensions avec 128 filtres de taille (5, 5) et un pas de 2 ; la couche intermédiaire 68 est une couche dense à 1024 sorties ; et la couche de sortie 62 est une couche dense à une sortie.

Avantageusement, une fonction d'activation caractérise chaque neurone du premier réseau 18. La fonction d'activation est, par exemple, une fonction non linéaire, par exemple de type ReLU (de l'anglais « Rectified Linear Unit »).

Le module de supervision de l'entrainement 36 comporte un algorithme d'optimisation permettant de faire évoluer les paramètres des premier et second réseaux de neurones simultanément.

De préférence, l'algorithme d'optimisation est un algorithme d'optimisation Adam, connu de l'homme du métier. L'algorithme d'optimisation Adam est notamment détaillé dans le document Adam : A method for stochastic optimization de D. P. Kingma et J. Ba, dans arXiv - Computer Vision and Machine Learning (2014). Dans la présente application, l'algorithme Adam est paramétré avec un taux d'apprentissage $\alpha$ de $10^{-4}$, un taux de décroissance exponentiel pour les estimations du premier moment $\beta1$ de 0.5, et un taux de décroissance exponentiel pour les estimations du second moment $\beta2$ de 0.9.

L'algorithme d'optimisation est fondé sur la minimisation d'une fonction de coût C, et met en oeuvre une méthode dite de descente du gradient.

La fonction de coût C dépend d'une ou plusieurs valeurs indicatives calculée(s) par le module de discrimination 28 à partir d'un ou plusieurs ensembles de données d'entraînement De de la base de données 14 et d'une valeur indicative calculée par le module de discrimination 28 sur un ensemble de données simulées Ds produit par le module de génération 16.

Plus particulièrement, la fonction de cout C vérifie avantageusement l'équation suivante :

$$[\text{Math 1}] \quad C = E[P(x_s)]_{x_s \sim D_s} - E[P(x_e)]_{x_e \sim D_e}$$

où E[] est la fonction d'espérance mathématique, P(x) est la fonction réalisée par le module de discrimination 26, $x_s$ est un échantillon d'un ensemble de données simulées Ds, et $x_e$ est un échantillon d'un ensemble de données d'entrainement De.

La fonction de coût à minimiser consiste ainsi à mesurer l'écart entre la distribution des valeurs indicatives des ensembles de données d'entrainement et la valeur indicative de l'ensemble de données simulées en sortie du module de génération, comme décrit dans l'article « Wasserstein GAN » de M. Arjovsky et al.

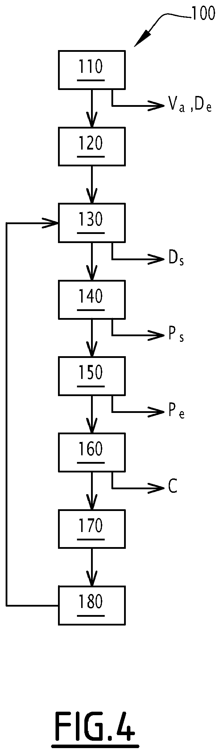

Pour la phase d'entrainement (Figure 4), le procédé selon l'invention, en mettant en oeuvre l'algorithme d'optimisation, fait évoluer les premier et second réseaux de neurones simultanément.

Plus précisément, au cours de la phase d'entrainement 100, les premier et deuxième réseaux 18, 28 sont constamment mis en compétition l'un avec l'autre et se renforcent mutuellement : le module de génération 16 fournit des données simulées de plus en plus similaires aux données d'entraînement, tandis que le module de discrimination 26 est de plus en plus restrictif sur ce qui peut constituer un ensemble de données semblable à un ensemble de données réelles.

La phase d'apprentissage 100 débute (étape 110) en fournissant, en tant que variable d'entrée du module 16, un vecteur aléatoire Va et en extrayant un ensemble de données d'entrainement De de la base de données 14.

Puis, à l'étape 120, les premier et deuxième réseaux 18, 28 sont initialisées avec des poids synaptiques aléatoires.

A l'étape 130, la phase d'apprentissage 100 se poursuit de manière itérative.

A l'itération courante, un ensemble de données simulées Ds est obtenu en sortie du module 16 à partir du vecteur aléatoire Va.

A l'étape 140, l'ensemble de données simulées Ds est appliqué en entrée du module 26 pour obtenir une valeur indicative simulées Ps.

Puis, à l'étape 150, l'ensemble de données d'entrainement De est appliqué en entrée du module 26 pour obtenir une valeur indicative entrainement Pe.

A l'étape 160, la valeur courante de la fonction de coût C est calculée à partir des valeurs indicatives Ps et Pe.

A l'étape 170, l'algorithme d'optimisation du module 36 est appliqué pour modifier les poids synaptiques des réseaux de neurones des modules 16 et 26 afin de minimiser la fonction de coût.

A l'étape 180, les poids des réseaux de neurones des modules 16 et 26 sont mise à jour et la phase d'entrainement 100 boucle à l'itération suivante.

Les itérations se poursuivent jusqu'à atteindre ou être suffisamment proche d'un minimum (ou d'un maximum) de la fonction de coût C.

Avantageusement, les premier et deuxième réseaux de neurones, 18 et 28, sont caractérisés respectivement par une première et une deuxième période d'actualisation, correspondant au nombre d'itérations de l'algorithme d'optimisation entre chaque actualisation de leurs poids synaptiques.

La deuxième période d'actualisation est avantageusement supérieure à la première période d'actualisation, de manière à faire converger le premier réseau de neurones (c'est-à-dire à produire un ensemble de données simulées semblable à l'ensemble de données d'entrainement) plus rapidement que le second réseau de neurones (c'est-à-dire à définir un critère de ressemblances entre les ensembles de données comparées qui soit réaliste).

Par exemple, la première période d'actualisation est égale à 1 et la deuxième période d'actualisation est égale à 32. Cela implique que le premier réseau de neurones 18 est configuré pour actualiser ses poids synaptiques à chaque itération, et le deuxième réseau de neurones 28 est configuré pour actualiser ses poids synaptiques toutes les 32 itérations.

En variante et avantageusement, à chaque itération sont pris en compte une pluralité d'ensembles de données d'entrainement De et une pluralité d'ensembles de données simulées Ds pour comparer des distributions de la valeur indicative et non pas des valeurs isolées. Par exemple 32 ensembles de données sont considérés à chaque itération.

A l'issue de la phase d'entrainement 100, les poids synaptiques du premier réseau de neurones sont entièrement déterminés et figés et un module de génération 16 final est obtenu.

Une fois la phase d'entrainement 100 réalisée et les poids synaptiques du module 16 déterminés, le procédé selon l'invention passe dans une phase d'exploitation 200 du module de génération 16 final.

La phase d'exploitation 200 va être présentée à l'aide de la figure 4.

Lors d'une étape initiale 210, un vecteur aléatoire Va est appliqué en entrée du module de génération 16 final. Ce vecteur aléatoire Va est de même nature que celui utilisé pour la phase d'entrainement 100. Il s'agit ainsi par exemple, d'un vecteur aléatoire gaussien, centré et de variance unitaire. Le vecteur aléatoire est généré aléatoirement.

Lors d'une étape 220, l'exécution du module de génération 16 final sur le vecteur aléatoire Va conduit à la production d'un ensemble de données simulées Ds.

Conformément à la phase d'entrainement, l'ensemble de données simulées Ds obtenu dans la phase d'exploitation est similaire à un ensemble de données réelles de fouillis de mer.

A l'étape 230, l'ensemble de données simulées de fouillis de mer Ds est utilisé pour déterminer un seuil de détection optimal d'un système radar donné (en particulier le système radar ayant permis d'obtenir les ensembles de données d'entrainement de la base de donnée 14) afin de mieux détecter les cibles d'intérêt, ou, plus généralement, pour pouvoir définir les caractéristiques d'un système radar lors de la conception de ce dernier.

Le dispositif de génération 10 selon l'invention permet de générer des données simulées de fouillis de mer se rapprochant le plus possible de données réelles, en s'affranchissant de l'utilisation de modèles statistiques du fouillis de mer.

En outre, chaque ensemble de données simulées est différent en fonction du vecteur aléatoire appliqué en entrée du module de génération 16 final, ce qui permet d'avoir une grande variabilité entre les ensembles de données simulées produites.

Si, dans l'exemple de la figure 1, le dispositif de génération 10 met en oeuvre l'invention sous la forme d'un programme d'ordinateur exécutable par le processeur 44, en variante elle peut être mise en oeuvre sous forme matérielle, par exemple au moyen d'un composant logique programmable, tel qu'un FPGA (de l'anglais « Field Programmable Gate Array ») ou encore au moyen d'un circuit intégré dédié, tel qu'un ASIC (de l'anglais « Applications Spécifie Integrated Circuit »).


## Revendications

1. Procédé de génération d'un ensemble de données simulées (Ds) du fouillis de mer, **caractérisé en ce que** ledit procédé s'appuie sur un module de génération (16) intégrant un premier réseau de neurones (18) et un module de discrimination (26) intégrant un second réseau de neurones (28) et met en oeuvre, dans une phase d'entrainement (100) simultanée des premier et second réseaux de neurones (18, 28), un algorithme d'optimisation commun utilisant des ensembles de données d'entrainement (De) contenus dans une base de données (14) et correspondant à des ensembles de données réelles du fouillis de mer, de manière à faire converger itérativement et simultanément les premier et second réseaux de neurones (18, 28) afin que le module de génération (16) fournisse des ensembles de données simulées (Ds) qui soient de plus en plus similaires aux ensembles de données d'entrainement (De), tandis que le module de discrimination (26) est de plus en plus restrictif sur ce qui peut constituer un ensemble de données semblable à un ensemble de données d'entrainement (De), le procédé comportant en outre, après la phase d'entrainement (100) ayant conduit à la définition d'un module de génération (16) final, une phase d'exploitation (200), consistant à produire des ensembles de données simulées (Ds) du fouillis de mer à partir du module de génération (16) final.

2. Procédé de génération selon la revendication 1, dans lequel, dans la phase d'exploitation (200), un ensemble de données simulées (Ds) est ensuite utilisé pour déterminer un seuil de détection optimal d'un système radar donné afin de mieux détecter des cibles d'intérêt, ou pour pouvoir définir les caractéristiques d'un système radar.

3. Dispositif de génération (10) pour la mise en oeuvre du procédé selon la revendication 1 ou la revendication 2, comportant :

   - un module de génération (16) prenant en entrée un vecteur aléatoire (Va) et produisant en sortie un ensemble de données simulées (Ds),
   - un module de discrimination (26) prenant en entrée un ensemble de données (D) parmi un ensemble de données d'entraînement (De) et un ensemble de données simulées (Ds), et produisant en sortie une valeur indicative (P) d'une probabilité que ledit ensemble de données (D) corresponde à un ensemble de données réelles du fouillis de mer, et,
   - un module de supervision d'entrainement (36) mettant en oeuvre ledit algorithme d'optimisation commun.

4. Dispositif de génération (10) selon la revendication 3, dans lequel l'algorithme d'optimisation commun s'appuie sur une fonction de coût (C), la fonction de coût (C) prenant comme variables, d'une part, la valeur indicative (Pe) déterminée à partir d'un ensemble de données d'entraînement (De) et, d'autre part, la valeur indicative (Ps) déterminée à partir d'un ensemble de données simulées (Ds).

5. Dispositif de génération (10) selon la revendication 3 ou la revendication 4, dans lequel l'algorithme d'optimisation est un algorithme d'optimisation Adam.

6. Dispositif de génération (10) selon l'une quelconque des revendications 3 à 5, dans lequel le premier réseau de neurones (18) et le deuxième réseau de neurones (28) possèdent des périodes d'actualisation différentes, une période d'actualisation correspondant au nombre d'itérations de l'algorithme d'optimisation entre chaque actualisation des poids synaptiques du réseau de neurones considéré, la deuxième période d'actualisation étant supérieure à la première période d'actualisation.

7. Dispositif de génération (10) selon l'une quelconque des revendications 3 à 6, dans lequel le vecteur aléatoire (Va) est un vecteur gaussien, centré et de variance unitaire.

8. Dispositif de génération (10) selon l'une quelconque des 3 à 7, dans lequel chaque ensemble de données est une matrice à deux dimensions respectivement selon une coordonnée d'angle et une coordonnée de distance par rapport au système radar.

9. Dispositif de génération (10) selon l'une quelconque des 3 à 8, dans lequel une donnée est une grandeur physique de nature à pouvoir être mesurée par une électronique bas niveau d'un système radar, notamment un système radar aéroporté.

**10.** Programme d'ordinateur comportant des instructions logicielles qui lorsqu'elles sont exécutées par un ordinateur, mettent en oeuvre le procédé selon la revendication 1 ou la revendication 2.

**Patentansprüche**

**1.** Generierungsverfahren eines simulierten Datensatzes (Ds) des Seegangsreflexes, **dadurch gekennzeichnet, dass** sich das Verfahren auf ein Generierungsmodul (16), das ein erstes neuronales Netz (18) integriert, und ein Diskriminierungsmodul (26), das ein zweites neuronales Netz (28) integriert, stützt und in einer gleichzeitigen Trainingsphase (100) des ersten und des zweiten neuronalen Netzes (18, 28) einen gemeinsamen Optimierungsalgorithmus, der Trainingsdatensätze (De) verwendet, die in einer Datenbank (14) enthalten sind und realen Datensätzen des Seegangsreflexes entsprechen, implementiert, um iterativ und gleichzeitig das erste und das zweite neuronale Netz (18, 28) zu konvergieren, sodass das Generierungsmodul (16) simulierte Datensätze (Ds) bereitstellt, die den Trainingsdatensätzen (De) zunehmend ähnlich sind, während das Diskriminierungsmodul (26) zunehmend restriktiver ist, was einen Datensatz ähnlich einem Trainingsdatensatz (De) bilden kann, das Verfahren nach der Trainingsphase (100), die zur Definition eines endgültigen Generierungsmoduls (16) geführt hat, ferner umfassen eine Betriebsphase (200), die darin besteht, simulierte Datensätze (Ds) des Seegangsreflexes aus dem endgültigen Generierungsmodul (16) zu erzeugen.

**2.** Generierungsverfahren nach Anspruch 1, wobei in der Betriebsphase (200) ein simulierter Datensatz (Ds) anschließend verwendet wird, um eine optimale Erkennungsschwelle eines gegebenen Radarsystems zu bestimmen, um Ziele von Interesse besser zu erkennen, oder um die Eigenschaften eines Radarsystems definieren zu können.

**3.** Generierungsvorrichtung (10) zum Implementieren des Verfahrens nach Anspruch 1 oder Anspruch 2, umfassend:

     - ein Generierungsmodul (16), das als Eingang einen Zufallsvektor (Va) nimmt und als Ausgang einen Satz simulierter Daten (Ds) erzeugt,
     - ein Diskriminierungsmodul (26), das als Eingang einen Datensatz (D) aus einem Trainingsdatensatz (De) und einem Satz von simulierten Daten (Ds) nimmt und als Ausgang einen Wert erzeugt, der eine Wahrscheinlichkeit (P) angibt, dass der Datensatz (D) einem Satz von tatsächlichen Daten des Seegangsreflexes entspricht, und,

     - ein Trainingsüberwachungsmodul (36), das den gemeinsamen Optimierungsalgorithmus implementiert.

**4.** Generierungsvorrichtung (10) nach Anspruch 3, wobei sich der gemeinsame Optimierungsalgorithmus auf eine Kostenfunktion (C) stützt, wobei die Kostenfunktion (C) als Variablen einerseits den aus einem Trainingsdatensatz (De) bestimmten Richtwert (Pe) und andererseits den aus einem Satz von simulierten Daten (Ds) bestimmten Richtwert (Ps) nimmt.

**5.** Generierungsvorrichtung (10) nach Anspruch 3 oder Anspruch 4, wobei der Optimierungsalgorithmus ein Adam-Optimierungsalgorithmus ist.

**6.** Generierungsvorrichtung (10) nach einem der Ansprüche 3 bis 5, wobei das erste neuronale Netz (18) und das zweite neuronale Netz (28) unterschiedliche Aktualisierungsperioden besitzen, wobei eine Aktualisierungsperiode der Anzahl von Iterationen des Optimierungsalgorithmus zwischen jeder Aktualisierung der synaptischen Gewichte des betrachteten neuronalen Netzes entspricht, wobei die zweite Aktualisierungsperiode größer ist als die erste Aktualisierungsperiode.

**7.** Generierungsvorrichtung (10) nach einem der Ansprüche 3 bis 6, wobei der Zufallsvektor (Va) ein Gaußscher, zentrierter Vektor mit einer Einheitsvarianz ist.

**8.** Generierungsvorrichtung (10) nach einem der Punkte 3 bis 7, wobei jeder Datensatz eine zweidimensionale Matrix jeweils gemäß einer Winkelkoordinate und einer Entfernungskoordinate in Bezug auf das Radarsystem ist.

**9.** Generierungsvorrichtung (10) nach einem der Punkte 3 bis 8, wobei ein Datenwert eine derartige physikalische Größe ist, dass sie von einer Elektronik auf niedriger Ebene eines Radarsystems, insbesondere eines luftgestützten Radarsystems, gemessen werden kann.

**10.** Computerprogramm, umfassend Softwareanweisungen, die, wenn sie von einem Computer ausgeführt werden, das Verfahren nach Anspruch 1 oder Anspruch 2 implementieren.

**Claims**

**1.** Method for generating a set of simulated sea clutter data (Ds), **characterised in that** said method relies on a generation module (16) integrating a first neural network (18) and a discrimination module (26) integrating a second neural network (28) and implements, in a simultaneous training phase (100) of the first and second neural networks (18, 28), a common optimization algorithm using data sets (De) contained in a database (14) and corresponding to sets of real sea clutter data, so as to iteratively and simultaneously converge the first and second neural networks (18, 28) so that the generation module (16) provides simulated data sets (Ds) which are increasingly similar to the training data sets (De), while the discrimination module (26) is increasingly restrictive on which can constitute a set of data similar to a set of training data (De), the method further comprising, after the training phase (100) having led to the definition of a final generation module (16), an operation phase (200), consisting in producing sets of simulated data (Ds) of the sea clutter from the final generation module (16).

2. Generation method according to claim 1, in which, in the operation phase (200), a set of simulated data (Ds) is then used to determine an optimal detection threshold of a given radar system in order to better detect targets of interest, or to be able to define the characteristics of a radar system.

3. Generation device (10) for implementing the method according to claim 1 or claim 2, comprising:

   - a generation module (16) taking as input a random vector (Va) and producing as output a set of simulated data (Ds),
   - a discrimination module (26) taking as input a set of data (D) from among a set of training data (De) and a set of simulated data (Ds), and producing as output an indicative value (P) d a probability that said data set (D) corresponds to a real sea clutter data set, and,
   - a training supervision module (36) implementing said common optimization algorithm.

4. Generation device (10) according to Claim 3, in which the common optimisation algorithm is based on a cost function (C), the cost function (C) taking as variables, on the one hand, the indicative value (Pe) determined from a set of training data (De) and, on the other hand, the indicative value (Ps) determined from a set of simulated data (Ds).

5. Generation device (10) according to claim 3 or claim 4, wherein the optimisation algorithm is an Adam optimisation algorithm.

6. Generation device (10) according to any one of claims 3 to 5, wherein the first neural network (18) and the second neural network (28) have different update periods, an update period corresponding the number of iterations of the optimisation algorithm between each updating of the synaptic weights of the neural network considered, the second updating period being greater than the first updating period.

7. Generation device (10) according to any one of Claims 3 to 6, in which the random vector (Va) is a Gaussian vector, centred and of unit variance.

8. Generation device (10) according to any one of 3 to 7, in which each set of data is a two-dimensional matrix respectively according to an angle coordinate and a distance coordinate with respect to the radar system.

9. Generation device (10) according to any one of 3 to 8, in which a piece of data is a physical quantity capable of being measured by low-level electronics of a radar system, in particular an airborne radar system.

10. A computer program comprising software instructions which when executed by a computer implements the method of claim 1 or claim 2.

## FIG.1

**FIG.2**

## FIG.3

100

110

$V_a$ , $D_e$

120

130

$D_s$

140

$P_s$

150

$P_e$

160

C

170

180

# FIG.4

**FIG.5**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **G. HENNESSEY.** *Sea-clutter modeling using a radial-basis-function neural network*
- **SU XIAOHONG.** *Prédiction of Sea Clutter Based on Chaos Theory with RBF and K-mean Clustering*
- **M. M. HORST ; F. B. DYER ; M. T. TULEY.** Radar Sea Clutter Model. *IEEE international conférence on Antennas and Propagation,* 1978

- **I. J. GOODFELLOW et al.** Generative adversarial nets. *NIPS,* 2014
- **D. P. KINGMA ; J. BA.** Adam : A method for stochastic optimization. *arXiv - Computer Vision and Machine Learning,* 2014
- **M. ARJOVSKY.** *asserstein GAN*